# EUROPEAN PATENT SPECIFICATION

(11) **EP 0 516 001 B1**
(45) Date of publication and mention of the grant of the patent: **29.11.1995**
(21) Application number: 92108709.4
(22) Date of filing: 22.05.1992
(51) Int. Cl.: C01B 17/92, C01B 17/58

(54) **Process for the regeneration of spent sulphuric acid**
Verfahren zur Regenerierung von Abfallschwefelsäure
Procédé de régénération d'acide sulfurique usé

(30) Priority: 24.05.1991 DK 981/91
(43) Date of publication of application: 02.12.1992
(73) Proprietor: Haldor Topsoe A/S, DK-2800 Lyngby (DK)
(72) Inventor: Schoubye, Peter, DK-2950 Vedbaek (DK)
(74) Representative: Grünecker, Kinkeldey, Stockmair & Schwanhäusser Anwaltssozietät

(56) References cited:
- DE-A- 2 005 905
- DE-B- 1 220 398
- GB-A- 1 033 235
- GB-A- 1 548 651
- US-A- 3 645 683
- US-A- 4 376 107
- US-A- 5 082 645

## Description

This invention relates to a process for the regeneration of spent sulphuric acid from chemical processes.

More particularly, the invention enables regeneration of sulphuric acid having served as catalyst in organic synthesis processes and oil refining processes, such as processes for the production of methyl methacrylate, sulphonation, nitration and alkylation processes and in the refining of lubricating oils. Spent sulphuric acid leaving these processes, is usually contaminated with ammonium and organic compounds, which have to be removed before the acid is recycled to the processes.

Known methods of regenerating spent sulphuric acid from organic synthesis processes, comprise in general the following sequence of process step:
incineration of the spent acid in a furnace at 850-1200°C with typically 2-3 vol.% O₂ excess of oxygen in the furnace exit-gas;
then cooling the exit-gas from the furnace by heat exchange to about 250°C, and further cooling to about 40°C, by quenching with water and subsequently by scrubbing with diluted sulphuric acid in a scrubbing tower.

Thereby, most of the dust, SO₃, ammonium and organic compounds in the acid together with the content of water in the exit-gas in excess of the partial pressure over the scrubbing liquor are separated from the gas as a waste stream of contaminated diluted sulphuric acid. A part of SO₂, further contained in the furnace exit-gas, is oxidized in the liquid phase in the scrubber, and contributes to the amount of diluted waste acid produced. The gas leaving the scrubber at about 40°C is saturated with water and contains minor amounts of SO₃ in the form of sulphuric acid mist.

In a further process step, the exit-gas from the scrubber is mixed with air and dried in a drying condenser by concentrated sulphuric acid, which is produced in a subsequent sulphuric acid plant. In the sulphuric acid plant, SO₂ in the dried gas is oxidized to SO₃ at 400-600°C and absorbed by circulating, concentrated sulphuric acid.

As a general disadvantage of the known regeneration methods, the temperature during incineration of the spent sulphuric acid has to be sufficiently high to ensure substantially complete decomposition of SO₃ into SO₂, and to obtain a nearly complete combustion of organic compounds and ammonium salts, being usually present as NH₄HSO₄, into H₂O, CO₂ and N₂. Thereby, considerable amounts of support fuel are required for heating the gas to reach the high temperatures necessary for substantially decomposition of SO₃ into SO₂.

At temperatures above 800-900°C, SO₂, SO₃ and O₂ will be in equilibrium in the furnace exit-gas according to the reaction: 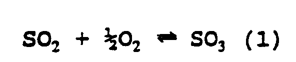
The fraction α(SO₃) = (SO₃)/[(SO₂) + (SO₃)] of the total amount of SO₂ + SO₃, which is present as SO₃ in the gas at equilibrium decreases with increasing temperature and decreasing content of O₂. At temperatures of about 1000°C, 2.2-2.6 vol% of the sulphur is present as SO₃, which is removed from the process gas as diluted waste acid. If the content of excess air is decreased to below 2-3 vol% in the gas, the content of combustibles in the gas may increase to levels unacceptable in the downstream process steps.

As a further disadvantage, the dried gas being fed to the sulphuric acid plant has to be substantially free of components, which form water during the oxidation of SO₂ to SO₃. Presence of water in the plant process gas is detrimental for the operation of the SO₃-absorbers in the plant. Furthermore, all sulphuric acid mist, contained in the scrubber exit-gas and causing heavy corrosion in the sulphuric acid plant, has to be removed upstream to the plant, which according to the known methods is performed by a wet electrostatic separation step prior to the drying of the scrubber exit-gas.

US-A-3645683 discloses a process for the production of a sulphur dioxide-containing gas for use in the manufacture of sulphuric acid comprising spraying a waste liquor comprising a sulphuric acid and an ammonium salt into a reactor in the presence of molecular oxygen at a temperature of 850 to 1150°C.

DE-B-1220398 discloses a decomposition process wherein spent sulphuric acid is recovered by heating in a reducing atmosphere at 400 to 600°C.

It is the object of this invention to provide an improved process of regenerating spent sulphuric acid, which requires a reduced number of process steps as compared to the known methods and in particular is an economical process saving investment and operating costs by less consumption of support fuel per ton regenerated sulphuric acid and substantially no production of undesired diluted waste acid during regeneration.

Said object is achieved by a process for the regeneration of spent sulphuric acid containing ammonium sulphate and/or organic compounds from chemical processes by evaporating and decomposing the spent sulphuric acid and oxidizing oxidizable components, characterized in that said process comprises the steps of evaporating and decomposing the spent sulphuric acid at a temperature of 400-800°C with excess of air, to a gas mainly consisting of carbon dioxide, steam, nitrogen, oxygen, sulphur dioxide and sulphur trioxide together with minor amounts of ammonia, carbon monoxide, residual organic compounds and dust from solids in the spent acid; adjusting the temperature of the gas to 360-450°C and oxidizing oxidizable components in the cooled gas by contact with an oxidation catalyst; cooling the oxidized gas to a temperature of 10-50°C above the sulphuric acid dew point in the gas and condensing sulphuric acid formed in the cooled and oxidized gas.

In practice of the invention, spent sulphuric acid is decomposed at 400-800°C in a furnace with excess of air preheated to about 500°C. The acid dissociates instantly into SO₃ and H₂O at temperatures above 400-450°C. Above 400°C ammonium compounds, mainly present in the acid as NH₄HSO₄, evaporate and decompose in the presence of oxygen into SO₂ and N₂ according to the following reaction scheme:

NH₄HSO₄ → NH₃ + SO₃ + H₂O (2)

2NH₃ + SO₃ + O₂ → SO₂ + N₂ + 3H₂O (3)

2NH₃ + 3SO₃ → N₂ + 3H₂O + 3SO₂ (4)

2NH₃ + 3/2 O₂ → N₂ + 3H₂O (5)

Decomposition of ammonium compounds to N₂ is incomplete at furnace temperatures below 650-700°C. At temperatures of 400-500°C and a residence time of less than one second, about 10% of the ammonium may be present as NH₃ in the exit-gas from the furnace.

Organic compounds, denoted in the following as "HC", are oxidized according to the below reactions by oxygen and SO₃, which is formed during the decomposition of spent sulphuric acid:

HC + 5O₂ → 4CO₂ + 2H₂O (6)

HC + 5SO₃ → 2CO₂ + 2H₂O + 5SO₂ (7)

Complete evaporation and nearly complete decomposition and oxidation of organic compounds and carbon monoxide, is obtained at temperatures of 650-750°C with spent sulphuric acid from the alkylation of gasoline containing about 6 vol% HC and no ammonium.

Evaporation of spent sulphuric acid from e.g. the production of methacrylic esters leads to a high ratio of SO₂ to SO₃ in the decomposed sulphuric acid within the temperature range of from 450°C to 800°C, even with a large excess of O₂, while the alkylation acid leaves about equal amounts of SO₂ and SO₃ in the furnace exit gas. Thus, the reaction between SO₂, SO₃ and O₂ according to reaction (1) does not proceed significantly at temperatures below 800-850°C in the gas.

SO₂ together with NH₃ in the exit-gas from the furnace are oxidized to CO₂, H₂O and N₂ in a subsequent oxidation step in the presence of a catalyst, arranged as fixed bed in one or more oxidation reactors with intercooling between the beds, preferably in at least two reactors.

Suitable catalysts for the oxidation of decomposed sulphuric acid gas with low content of organic compounds in the spent acid, i.e. concentration of less than 1 vol%, comprise between 1 and 5% by weight of vanadium pentoxide and between 2 and 20% by weight of pyrosulphates of potassium and/or sodium supported on a silica carrier. At higher concentrations of organic compounds, as in the regeneration of spent sulphuric acid from alkylation processes, a preferred catalyst for the oxidation step comprises between 200 and 2000 ppm of platinum and/or palladium on a silica carrier.

The gas leaving the furnace usually further contains 0.1-1 g dust per Nm³ originating from metal sulphates contained in the spent acid. A bed of particulate oxidation catalyst may, thereby, rapidly be plugged by the dust.

Thus, in a preferred embodiment of the invention the oxidation reactors are loaded with the above catalysts in the form of monolithic blocks having parallel channels through the blocks with a hydraulic diameter of 3-8 mm. These monolithic structured catalysts allow dust in the gas to pass through the beds without plugging the catalyst. Thereby, a catalyst volume corresponding to 10-40 Nm³/h per m² of channel surface in the bed is sufficient for substantially oxidation of oxidizable components in the gas.

The above catalysts are commercially available from Haldor Topsøe A/S, Denmark, either in the form of ring-shaped catalyst bodies or as monolithic blocks.

By the catalytic oxidation step about 96-99% of the sulphur oxides contained in the furnace exit-gas are oxidized to SO₃. The gas leaving this step is then cooled to 100-120°C by heat exchange for recovery of waste heat.

SO₃ is, during cooling, completely hydrated into sulphuric acid vapours. These vapours are condensed in form of 97-98.5% concentrated sulphuric acid in a subsequent sulphuric acid condenser. The sulphuric acid condenser may be constructed either as a falling film condenser, in which the vapours are condensed in air cooled glass tubes, as further described in GB Patent No. 2,117,368 and WO Publication No. 89/12024, or as a condenser, in which the gas is absorbed by countercurrently circulating sulphuric acid, as described in GB Patent No. 2,072,642. Before condensation or absorption of sulphuric acid vapours in the condensers, it is preferred to add a controlled amount of solid particles to the gas in order to keep concentrations of sulphuric acid mist from the condenser below 50 mg H₂SO₄/Nm³ in the condenser offgas. Addition of solid particles to sulphuric acid vapours is described in WO Publication No. 89/12025.

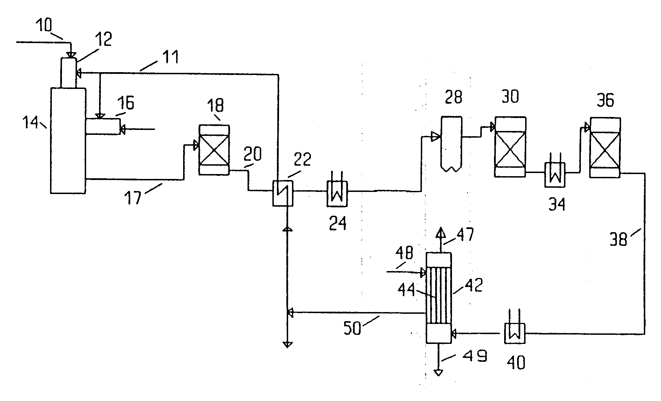

The above as well as further features of the invention will become more apparent by the following more detailed description with reference to the drawing, in which the sole Figure is a schematic flow scheme of a regeneration system, suitable for carrying out a preferred embodiment of the invention.

The Figure is a simplified flow scheme showing a regeneration system with three catalytic oxidation reactors and intercooling between the reactors. Spent sulphuric acid is fed on line 10 to evaporation furnace 14. In furnace 14 the acid is evaporated at a temperature of 400-800°C together with excess of air supplied on line 11. Before being introduced into the furnace, the air is preheated to about 500°C by heat exchange with oxidized furnace gas in heat exchanger 22 as further described below. The acid-air mixture is introduced into furnace 14 by spraying the mixture through nozzle 12. The atomized acid-air mixture is evaporated at 400-800°C, while support heat is supplied from an oil or gas burner 16 in the upper part of the furnace.

At temperatures above 400-450°C the sulphuric acid evaporates and dissociates instantly to SO₃ and H₂O, while a part of combustibles in the acid, mainly comprising ammonium and organic compounds, are decomposed and oxidized by oxygen and formed SO₃. Remaining amounts of combustibles and SO₂ in the furnace exit-gas 17 are decomposed in oxidation reactors 18, 30 and 36 downsteam to furnace 14.

Reactors 18, 30 and 36 are each provided with a fixed bed of the above mentioned Topsøe oxidation catalysts, either in the form of ring shaped catalyst particles or as monolithic blocks.

By passage through reactor 18, remaining SO₂, in the furnace exit-gas is catalytically oxidized to SO₃ according to reaction (1). Most of the remaining combustibles further contained in the exit-gas are oxidized to CO₂, H₂O and N₂.

The oxidation reactions proceeding in reactor 18 cause an adiabatic temperature raise of 10-200°C across the catalyst bed in reactor 18, depending on the concentration of combustibles and SO₂, in gas 17. Oxidized gas leaving reactor 18 through line 20 is subsequently cooled in air preheater 22 with air being passed to furnace 14. The gas is further cooled to about 370-420°C in trim cooler 24. The cooled gas is then introduced into dust filter 28, which is in the form of an electrostatic precipitator. The gas usually contains about 0.1-1 g dust/Nm³ before filter 28, depending on the content of metal sulphates and other solid contaminants in the spent sulphuric acid. In the filter 28 the amount of dust has to be reduced to ≦ 10 mg per Nm³ gas in order to prevent plugging of the oxidation catalysts in reactors 30 and 36. In the case that the oxidation catalysts in reactor 30 and 36 are in the form of monolithic blocks, filter 28 may be omitted, as the monolithic blocks are insensitive to dust being present in the gas.

Residual amounts of SO₂ and combustibles in the oxidized gas from reactor 18 are further oxidized in reactor 30 and 36 being connected series with intercooling in cooler 34.

After a total oxidation of about 96-99% of sulphur dioxide and combustibles into SO₃, CO₂, H₂O and N₂, oxidized reactor exit-gas leaves reactor 36 and is passed in line 38 to sulphuric acid condenser 42. Before being introduced into condenser 42, the gas is cooled to about 300-340°C in cooler 40. Sulphuric acid condenser 42 is provided with a plurality of acid resistant tubes 44 being externally cooled with cooling air 48 as further described in the aforementioned WO Publication No. 89/12024. In condenser 42 the oxidized gas flows through tubes 44 and is, thereby, cooled to about 100-120°C by the cooling air flowing along the outer wall of tubes 44 in counterflow and indirect heat exchange with the gas in the tubes. SO₃, contained in the gas is, thereby, completely hydrated to sulphuric acid vapours, which condenses on the inner walls of tubes 44. The condensed and regenerated sulphuric acid is then withdrawn at the bottom of condenser 42 through line 49 in form of 99-99.5 % concentrated sulphuric acid. Excess of water in the oxidized gas leaves condenser 44 in condenser offgas 47, together with CO₂, N₂, O₂ and small amounts of SO₂. A part of the cooling air leaving condenser 42 in line 50 is sent in line 11 through heat exchanger 22 and introduced into furnace 14.

## Claims

1. A process for the regeneration of spent sulphuric acid containing ammonium sulphate and/or organic compounds from chemical processes by evaporating and decomposing the spent sulphuric acid and oxidizing oxidizable components, **characterized in that** said process comprises the steps of
evaporating and decomposing the spent sulphuric acid at a temperature of 400-800°C with excess of air, to a gas mainly consisting of carbon dioxide, steam, nitrogen, oxygen, sulphur dioxide and sulphur trioxide together with minor amounts of ammonia, carbon monoxide, residual organic compounds and dust from solids in the spent acid;
adjusting the temperature of the gas to 360-450°C and oxidizing oxidizable components in the cooled gas by contact with an oxidation catalyst;
cooling the oxidized gas to a temperature of 10-50°C above the sulphuric acid dew point in the gas and condensing sulphuric acid formed in the cooled and oxidized gas.

2. The process of claim 1, wherein the oxidation of the gas is carried out in at least two reactors being provided with a fixed bed of the oxidation catalyst with intercooling between the beds.

3. The process of claim 1, wherein the oxidation catalyst comprises between 1% and 5% by weight of vanadium pentoxide and between 2% and 20% by weight of pyrosulphates of potassium and/or sodium supported on a silica carrier.

4. The process of claim 1, wherein the oxidation catalyst comprises between 200 and 2000 ppm by weight of platinum and/or palladium on a silica carrier.

5. The process of claim 1, wherein the oxidation catalyst is in the form of monolithic blocks being provided with parallel channels with a hydraulic diameter of 3-8 mm.

6. The process of claim 1, wherein the sulphuric acid formed in the oxidized gas is condensed in a sulphuric acid condenser being provided with a plurality of tubes externally cooled with air.

## Patentansprüche

1. Verfahren zur Regenerierung von Abfallschwefelsäure enthaltend Ammoniumsulfat und/oder organische Verbindungen aus chemischen Verfahren durch Verdampfen und Zersetzen der Abfallschwefelsäure und Oxidieren von oxidierbaren Bestandteilen**, dadurch gekennzeichnet**, daß das Verfahren die Schritte umfaßt:
Verdampfen und Zersetzen der Abfallschwefelsäure bei einer Temperatur von 400- 800°C mit einem Überschuß an Luft zu einem Gas, das hauptsächlich aus Kohlendioxid, Dampf, Stickstoff, Sauerstoff, Schwefeldioxid und Schwefeltrioxid zusammen mit kleineren Mengen Ammoniak, Kohlenmonoxid, restlichen organischen Verbindungen und Staub aus Feststoffen in der Abfallsäure besteht;
Einstellen der Temperatur des Gases auf 360-450°C und Oxidieren von oxidierbaren Bestandteilen in dem abgekühlten Gas durch Kontakt mit einem Oxidationskatalysator;
Kühlen des oxidierten Gases auf eine Temperatur von 10-50°C oberhalb des Taupunkts der Schwefelsäure in dem Gas und
Kondensieren der in dem abgekühlten und oxidierten Gas gebildeten Schwefelsäure.

2. Verfahren nach Anspruch 1, worin die Oxidation des Gases in mindestens zwei Reaktoren durchgeführt wird, die mit einem Festbett des Oxidationskatalysators versehen sind, wobei zwischen den Betten gekühlt wird.

3. Verfahren nach Anspruch 1, worin der Oxidationskatalysator zwischen 1 Gew.-% und 5 Gew.-% Vanadiumpentoxid und zwischen 2 Gew.-% und 20 Gew.-% Pyrosulfate von Kalium und/oder Natrium, aufgetragen auf einem Siliciumdioxidträger, umfaßt.

4. Verfahren nach Anspruch 1, worin der Oxidationskatalysator zwischen 200 und 2000 ppm, bezogen auf das Gewicht, Platin und/oder Palladium auf einem Siliciumdioxidträger umfaßt.

5. Verfahren nach Anspruch 1, worin der Oxidationskatalysator in Form von monolithischen Blöcken vorliegt, welche mit parallelen Kanälen mit einem hydraulischen Durchmesser von 3-8 mm versehen sind.

6. Verfahren nach Anspruch 1, worin die in dem oxidierten Gas gebildete Schwefelsäure in einem Schwefelsäurekondensator kondensiert wird, welcher mit einer Mehrzahl von Röhren versehen ist, die von außen mit Luft gekühlt werden.

## Revendications

1. Procédé de régénération d'acide sulfurique usé contenant du sulfate d'ammonium et/ou des composés organiques provenant de procédés chimiques, par évaporation et décomposition de l'acide sulfurique usé et oxydation des composants oxydables, caractérisé en ce que ledit procédé comprend les étapes consistant à :
évaporer et décomposer l'acide sulfurique usé à une température de 400-800°C avec excédent d'air pour former un gaz constitué de dioxyde de carbone, de vapeur, d'azote, d'oxygène, de dioxyde de soufre et de trioxyde de soufre, avec des quantités mineures d'ammoniac, de monoxyde de carbone, de composés organiques résiduels et de poussières provenant des solides présents dans l'acide sulfurique usé ;
ajuster la température du gaz à 360-450°C et oxyder les composants oxydables présents dans le gaz refroidi, par contact avec un catalyseur d'oxydation ;
refroidir le gaz oxydé à une température de 10-50°C au-dessus du point de rosée de l'acide sulfurique dans le gaz et condenser l'acide sulfurique formé dans le gaz refroidi et oxydé.

2. Procédé selon la revendication 1, dans lequel l'oxydation du gaz est effectuée dans au moins deux réacteurs munis d'un bain fixe du catalyseur d'oxydation, avec refroidissement intermédiaire entre les bains.

3. Procédé selon la revendication 1, dans lequel le catalyseur d'oxydation comprend entre 1% et 5% en poids de pentoxyde de vanadium et entre 2% et 20% en poids de pyrosulfates de potassium et/ou de sodium portés par un support en silice.

4. Procédé selon la revendication 1, dans lequel le catalyseur d'oxydation contient entre 200 et 2000 ppm en poids de platine et/ou de palladium sur un support en silice.

5. Procédé selon la revendication 1, dans lequel le catalyseur d'oxydation est de la forme de blocs monolithiques munis de canaux parallèles d'un diamètre hydraulique de 3-8 mm.

6. Procédé selon la revendication 1, dans lequel l'acide sulfurique présent dans le gaz oxydé est condensé dans un condenseur à acide sulfurique muni d'une pluralité de tubes refroidis extérieurement à l'air.
